# EUROPEAN PATENT APPLICATION

(11) **EP 4 625 799 A1**
(43) Date of publication of application: **01.10.2025**
(21) Application number: 24778829.2
(22) Date of filing: 19.02.2024
(51) Int. Cl.: H02M 3/28, B60L 9/18, B60L 50/60, B60L 53/14, B60L 53/24, B60L 58/10, H02M 7/48, H02P 27/06

(54) **POWER SUPPLY DEVICE**

(30) Priority: 29.03.2023 JP 2023053442
(71) Applicant: AISIN CORPORATION, Kariya-shi, Aichi 448-8650 (JP)
(72) Inventor: MORIMOTO, Yuta, Kariya-shi, Aichi 448-8650 (JP); TAGUCHI, Shin, Kariya-shi, Aichi 448-8650 (JP)
(74) Representative: Kramer Barske Schmidtchen Patentanwälte PartG mbB
(86) International application number: PCT/JP2024/005669
(87) International publication number: WO 2024/202684

(57) **Abstract**

A power supply device includes: a motor drive unit including a field winding energization unit that energizes a field winding of a wound field motor based on direct current power from a battery, and an inverter that energizes a stator coil; an alternating current-to-direct current conversion unit that converts external alternating current power into direct current power; and a converter that converts the converted direct current power into direct current power with which the battery is chargeable. The converter includes a first conversion unit, a second conversion unit, and a transformer. The first conversion unit inputs the direct current power from the alternating current-to-direct current conversion unit to a primary winding of the transformer while oscillating it at a predetermined cycle. The second conversion unit converts alternating current power from a secondary winding of the transformer into direct current power composed of a direct current voltage having a voltage value at which the battery is chargeable. The field winding energization unit and the second conversion unit are provided in common.

## Description

### TECHNICAL FIELD

The present invention relates to a power supply device mounted on a vehicle.

### BACKGROUND ART

Hitherto, various motors have been used. An example of such a motor is a wound field motor having a field winding provided on a rotor and a stator coil on a stator. A control device for a rotary electric machine described in Patent Document 1 cited below includes an inverter that supplies electric power to a stator coil of a stator based on an output from a battery mounted on a vehicle, and a field energization circuit that supplies electric power to a field winding based on the output from the battery. The inverter has three legs corresponding to the number of phases of a motor, and the field energization circuit has two legs to change the direction of a current flowing through the field winding.

Batteries mounted on vehicles include a battery chargeable based on external power using a charger as described in Patent Document 2.

### Related Art Documents

### Patent Documents

Patent Document 1: Japanese Unexamined Patent Application Publication No. 2019-71733 (JP 2019-71733 A)
Patent Document 2: Japanese Unexamined Patent Application Publication No. 2017-158322 (JP 2017-158322 A)

### SUMMARY OF THE INVENTION

### Problem to be Solved by the Invention

When the control device that energizes a motor based on electric power from a battery as described in Patent Document 1 and the charger that charges the battery as described in Patent Document 2 are mounted on a vehicle, the size of the control device and the charger increases and the weight increases. In view of fuel economy, it is desirable to reduce the weight and size of a vehicle. Therefore, there is room for improvement when the control device that energizes a motor based on electric power from a battery and the charger that charges the battery are mounted on a vehicle.

In view of this, there is a demand for a power supply device that can achieve reduction in weight and size.

### Means for Solving the Problem

A characteristic configuration of the power supply device according to the present invention is as follows. The power supply device includes: a motor drive unit including a field winding energization unit configured to energize a field winding of a wound field motor using direct current power from a battery mounted on a vehicle, and an inverter configured to energize a stator coil; an alternating current-to-direct current conversion unit configured to convert external alternating current power into direct current power; and a converter configured to convert the direct current power converted by the alternating current-to-direct current conversion unit into direct current power with which the battery is chargeable. The converter includes a first conversion unit, a second conversion unit, and a transformer. The first conversion unit is configured to input the direct current power from the alternating current-to-direct current conversion unit to a primary winding of the transformer. The second conversion unit is configured to convert alternating current power from a secondary winding of the transformer into direct current power with which the battery is chargeable. The field winding energization unit and the second conversion unit are provided in common.

With this configuration, the field winding energization unit that energizes the field winding using the direct current power from the battery can be structured as a so-called full-bridge circuit, and the second conversion unit of the converter that converts the alternating current power from the secondary winding of the transformer into direct current power can be structured as a full-bridge circuit. Since the field winding energization unit and the second conversion unit are structured by the same circuit, the circuit structure of the power supply device can be simplified and the number of components can be reduced by providing the field winding energization unit and the second conversion unit in common. Thus, it is possible to reduce the weight and size of the power supply device.

### BRIEF DESCRIPTION OF THE DRAWINGS

[FIG. 1] FIG. 1 is a circuit diagram when a power supply device is used as a charger.
[FIG. 2] FIG. 2 is a circuit diagram when the power supply device is used as an alternating current power output device.
[FIG. 3] FIG. 3 is a circuit diagram when a wound field motor is driven by the power supply device.
[FIG. 4] FIG. 4 is a diagram showing operation states of the power supply device.

### MODES FOR CARRYING OUT THE INVENTION

The power supply device according to the present invention is configured to drive a wound field motor mounted on a vehicle, charge a battery mounted on the vehicle, and output alternating current power based on an output of the battery. A power supply device 1 of the present embodiment will be described below.

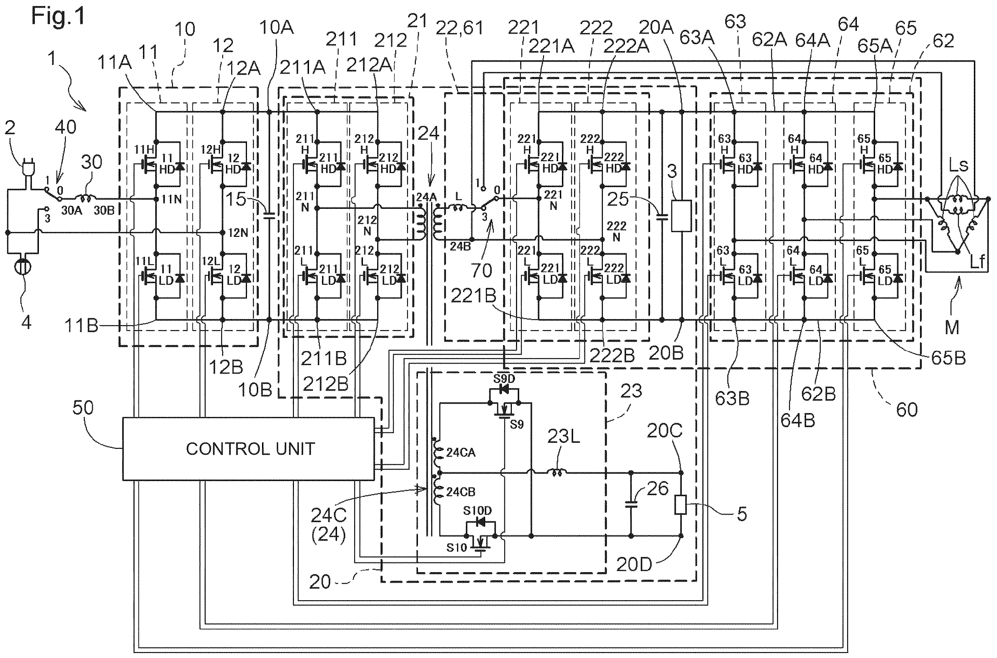

FIG. 1 is a circuit diagram of the power supply device 1. As shown in FIG. 1, the power supply device 1 includes an alternating current-to-direct current conversion unit 10, a converter 20, a control unit 50, a motor drive unit 60, and a switch 70. Each functional unit is implemented by hardware, software, or both of them with a CPU serving as its core component in order to perform processes related to driving of a wound field motor M, charging of a battery 3, and output of alternating current power as described above. In FIG. 1, the battery 3 and the battery 5 are shown as being included in the functional units, but the battery 3 and the battery 5 are not included in the functional units.

The alternating current-to-direct current conversion unit 10 converts external alternating current power into direct current power. The external power source is a power source outside the power supply device 1 and different from the battery 3 and the battery 5 mounted on the vehicle. The alternating current power refers to electric power composed of an alternating current voltage whose voltage value oscillates at a predetermined cycle. Specifically, the alternating current voltage oscillates at a commercial frequency (e.g., 50 Hz or 60 Hz) and corresponds to an alternating current voltage of 200 V (effective value) taken from a commercial power supply that is supplied by a single-phase three-wire system. The direct current power refers to electric power composed of a direct current voltage having a constant voltage value (excluding ripple voltage) relative to a reference voltage. The alternating current-to-direct current conversion unit 10 converts the alternating current power composed of such an alternating current voltage into the direct current power composed of the direct current voltage. The alternating current-to-direct current conversion unit 10 includes a pair of output portions 10A, 10B, and outputs the converted direct current power to the converter 20 described later via the pair of output portions 10A, 10B.

The alternating current-to-direct current conversion unit 10 includes a first leg 11 and a second leg 12. The first leg 11 and the second leg 12 are provided to the output portions 10A, 10B in parallel to each other. Therefore, one end 11A of the first leg 11 and one end 12A of the second leg 12 are connected to the output portion 10A, and the other end 11B of the first leg 11 and the other end 12B of the second leg 12 are connected to the output portion 10B.

The first leg 11 includes a high-side switching element 11H and a low-side switching element 11L connected in series. In the present embodiment, the switching element 11H and the switching element 11L are n-type MOS-FETs (metal-oxide-semiconductor field-effect transistors). The switching element 11H includes a drain terminal connected to the end 11A, and a source terminal connected to the drain terminal of the switching element 11L. The source terminal of the switching element 11L is connected to the end 11B. The gate terminals of the switching element 11H and the switching element 11L are connected to the control unit 50. Diodes 11HD, 11LD are each provided between the source terminal and the drain terminal of each of the switching element 11H and the switching element 11L with the anode terminal connected to the source terminal and the cathode terminal connected to the drain terminal.

The second leg 12 includes a high-side switching element 12H and a low-side switching element 12L connected in series. In the present embodiment, the switching element 12H and the switching element 12L are also n-type MOS-FETs. The switching element 12H includes a drain terminal connected to the end 12A, and a source terminal connected to the drain terminal of the switching element 12L. The source terminal of the switching element 12L is connected to the end 12B. The gate terminals of the switching element 12H and the switching element 12L are connected to the control unit 50. Diodes 12HD, 12LD are each provided between the source terminal and the drain terminal of each of the switching element 12H and the switching element 12L with the anode terminal connected to the source terminal and the cathode terminal connected to the drain terminal.

A capacitor 15 is provided across the output portion 10A and the output portion 10B of the alternating current-to-direct current conversion unit 10. The capacitor 15 smooths the direct current voltage converted by the alternating current-to-direct current conversion unit 10.

A reactor coil 30 includes one terminal 30B connected to a first node 11N between the two switching elements (switching element 11H and switching element 11L) of the first leg 11. The first node 11N between the two switching elements of the first leg 11 is a line (e.g., a wiring pattern on a board or a cable such as a harness) that connects the source terminal of the switching element 11H and the drain terminal of the switching element 11L. The first node 11N may be the source terminal of the switching element 11H or the drain terminal of the switching element 11L. The reactor coil 30 includes two terminals 30A, 30B, and the terminal 30B is connected to the first node 11N.

Alternating current power is supplied across the other terminal 30A of the reactor coil 30 and a second node 12N between the two switching elements (switching element 12H and switching element 12L) of the second leg 12. The second node 12N between the two switching elements of the second leg 12 is a line (e.g., a wiring pattern on a board or a cable such as a harness) that connects the source terminal of the switching element 12H and the drain terminal of the switching element 12L. The second node 12N may be the source terminal of the switching element 12H or the drain terminal of the switching element 12L. The terminal 30A of the reactor coil 30 is connected to one terminal of a supply unit 2 supplied with alternating current power, and the other terminal of the supply unit 2 is connected to the second node 12N. Therefore, the alternating current-to-direct current conversion unit 10 converts the alternating current power into direct current power using the switching element 11H and the switching element 11L of the first leg 11 and the switching element 12H and the switching element 12L of the second leg 12.

The converter 20 converts the direct current power converted by the alternating current-to-direct current conversion unit 10 into direct current power with which the battery 3 is chargeable. The direct current power converted by the alternating current-to-direct current conversion unit 10 is the direct current power output from the output portions 10A, 10B of the alternating current-to-direct current conversion unit 10. The battery 3 is a battery mounted on the vehicle and charged by the power supply device 1, and is charged based on the direct current power from the converter 20. The battery 3 is charged with a direct current voltage having any appropriate voltage value, and the voltage value of the direct current voltage of the direct current power output from the alternating current-to-direct current conversion unit 10 is any appropriate value. The converter 20 converts the voltage value of the direct current voltage output from the alternating current-to-direct current conversion unit 10 into any appropriate direct current voltage required for charging the battery 3.

The converter 20 of the present embodiment includes a first conversion unit 21, a second conversion unit 22, a third conversion unit 23, and a transformer 24. In the present embodiment, the transformer 24 is an insulated multi-port transformer including a primary winding 24A, a secondary winding 24B, and a tertiary winding 24C.

The first conversion unit 21 inputs the direct current power from the alternating current-to-direct current conversion unit 10 to the primary winding 24A of the transformer 24. The first conversion unit 21 includes a third leg 211 and a fourth leg 212. The third leg 211 and the fourth leg 212 are provided to the output portions 10A, 10B in parallel to each other. Therefore, one end 211A of the third leg 211 and one end 212A of the fourth leg 212 are connected to the output portion 10A, and the other end 211B of the third leg 211 and the other end 212B of the fourth leg 212 are connected to the output portion 10B.

The third leg 211 includes a high-side switching element 211H and a low-side switching element 211L connected in series. The switching element 211H and the switching element 211L are n-type MOS-FETs. The switching element 211H includes a drain terminal connected to the end 211A, and a source terminal connected to the drain terminal of the switching element 211L. The source terminal of the switching element 211L is connected to the end 211B. The gate terminals of the switching element 211H and the switching element 211L are connected to the control unit 50. Diodes 211HD, 211LD are each provided between the source terminal and the drain terminal of each of the switching element 211H and the switching element 211L with the anode terminal connected to the source terminal and the cathode terminal connected to the drain terminal.

The fourth leg 212 includes a high-side switching element 212H and a low-side switching element 212L connected in series. The switching element 212H and the switching element 212L are n-type MOS-FETs. The switching element 212H includes a drain terminal connected to the end 212A, and a source terminal connected to the drain terminal of the switching element 212L. The source terminal of the switching element 212L is connected to the end 212B. The gate terminals of the switching element 212H and the switching element 212L are connected to the control unit 50. Diodes 212HD, 212LD are each provided between the source terminal and the drain terminal of each of the switching element 212H and the switching element 212L with the anode terminal connected to the source terminal and the cathode terminal connected to the drain terminal.

The primary winding 24A is provided across a third node 211N between the two switching elements (switching element 211H and switching element 211L) of the third leg 211 and a fourth node 212N between the two switching elements (switching element 212H and switching element 212L) of the fourth leg 212. In the present embodiment, the winding start end of the primary winding 24A is connected to the third node 211N, and the winding termination end of the primary winding 24A is connected to the fourth node 212N.

A current (alternating current) according to the turn ratio between the primary winding 24A and the secondary winding 24B flows through the secondary winding 24B, and a voltage (alternating voltage) according to the turn ratio between the primary winding 24A and the secondary winding 24B is generated.

The second conversion unit 22 rectifies the alternating current power from the secondary winding 24B of the transformer 24 and converts it into direct current power with which the battery 3 is chargeable. The second conversion unit 22 includes a fifth leg 221 and a sixth leg 222. The fifth leg 221 and the sixth leg 222 are provided to output portions 20A, 20B of the converter 20 in parallel to each other. Therefore, one end 221A of the fifth leg 221 and one end 222A of the sixth leg 222 are connected to the output portion 20A, and the other end 221B of the fifth leg 221 and the other end 222B of the sixth leg 222 are connected to the output portion 20B.

The fifth leg 221 includes a high-side switching element 221H and a low-side switching element 221L connected in series. The switching element 221H and the switching element 221L are n-type MOS-FETs. The switching element 221H includes a drain terminal connected to the end 221A, and a source terminal connected to the drain terminal of the switching element 221L. The source terminal of the switching element 221L is connected to the end 221B. The gate terminals of the switching element 221H and the switching element 221L are connected to the control unit 50. Diodes 221HD, 221LD are each provided between the source terminal and the drain terminal of each of the switching element 221H and the switching element 221L with the anode terminal connected to the source terminal and the cathode terminal connected to the drain terminal.

The sixth leg 222 includes a high-side switching element 222H and a low-side switching element 222L connected in series. The switching element 222H and the switching element 222L are n-type MOS-FETs. The switching element 222H includes a drain terminal connected to the end 222A, and a source terminal connected to the drain terminal of the switching element 222L. The source terminal of the switching element 222L is connected to the end 222B. The gate terminals of the switching element 222H and the switching element 222L are connected to the control unit 50. Diodes 222HD, 222LD are each provided between the source terminal and the drain terminal of each of the switching element 222H and the switching element 222L with the anode terminal connected to the source terminal and the cathode terminal connected to the drain terminal.

The above secondary winding 24B is provided across a fifth node 221N between the two switching elements (switching element 221H and switching element 221L) of the fifth leg 221 and a sixth node 222N between the two switching elements (switching element 222H and switching element 222L) of the sixth leg 222. In the present embodiment, the winding start end of the secondary winding 24B is connected to the fifth node 221N via a reactor L, and the winding termination end of the secondary winding 24B is connected to the sixth node 222N.

A capacitor 25 is provided across the output portion 20A and the output portion 20B of the converter 20. The capacitor 25 smooths the direct current voltage converted by the converter 20.

A current (alternating current) according to the turn ratio between the primary winding 24A and the tertiary winding 24C flows through the tertiary winding 24C, and a voltage (alternating voltage) according to the turn ratio between the primary winding 24A and the tertiary winding 24C is generated. The third conversion unit 23 rectifies the voltage (alternating voltage) generated in the tertiary winding 24C and converts it into direct current power composed of a direct current voltage having a voltage value (e.g., 12 V) lower than the voltage value of the direct current voltage output from the second conversion unit 22.

In the present embodiment, the tertiary winding 24C includes a first tertiary winding 24CA and a second tertiary winding 24CB. The first tertiary winding 24CA and the second tertiary winding 24CB are provided such that the winding start end of the first tertiary winding 24CA and the winding termination end of the second tertiary winding 24CB are connected to each other. A switching element S9 to which a drain terminal is connected is provided at the winding start end of the first tertiary winding 24CA, and a switching element S10 to which a drain terminal is connected is provided at the winding termination end of the second tertiary winding 24CB. The source terminal of the switching element S9 and the source terminal of the switching element S10 are connected to a terminal 20D. The gate terminals of the switching element S9 and the switching element S10 are connected to the control unit 50. Diodes S9D, S10D are each provided between the source terminal and the drain terminal of each of the switching element S9 and the switching element S10 with the anode terminal connected to the source terminal and the cathode terminal connected to the drain terminal.

The winding termination end of the first tertiary winding 24CA and the winding start end of the second tertiary winding 24CB are connected to one terminal of a reactor coil 23L. The other terminal of the reactor coil 23L is connected to a terminal 20C. A capacitor 26 is provided across the terminal 20C and the terminal 20D. The third conversion unit 23 converts the alternating current power generated in the tertiary winding 24C into direct current power composed of a direct current voltage through synchronous rectification using the switching element S9 and the switching element S10.

A switching unit 40 switches the conversion operations of the converter 20. The conversion operations of the converter 20 correspond to an operation of converting alternating current power to direct current power and an operation of converting direct current power to alternating current power by the converter 20.

In the present embodiment, the converter 20 is switched from one of a first conversion state and a second conversion state to the other by the switching unit 40. The first conversion state is a state in which the converter 20 converts the direct current power from the alternating current-to-direct current conversion unit 10 into direct current power composed of a direct current voltage having a predetermined first voltage value, and is a state in which the power supply device 1 is used as a charger. The second conversion state is a state in which the converter 20 converts the direct current power from the battery 3 into direct current power composed of a direct current voltage having a predetermined second voltage value, and is a state in which the power supply device 1 is used as an alternating current power output device.

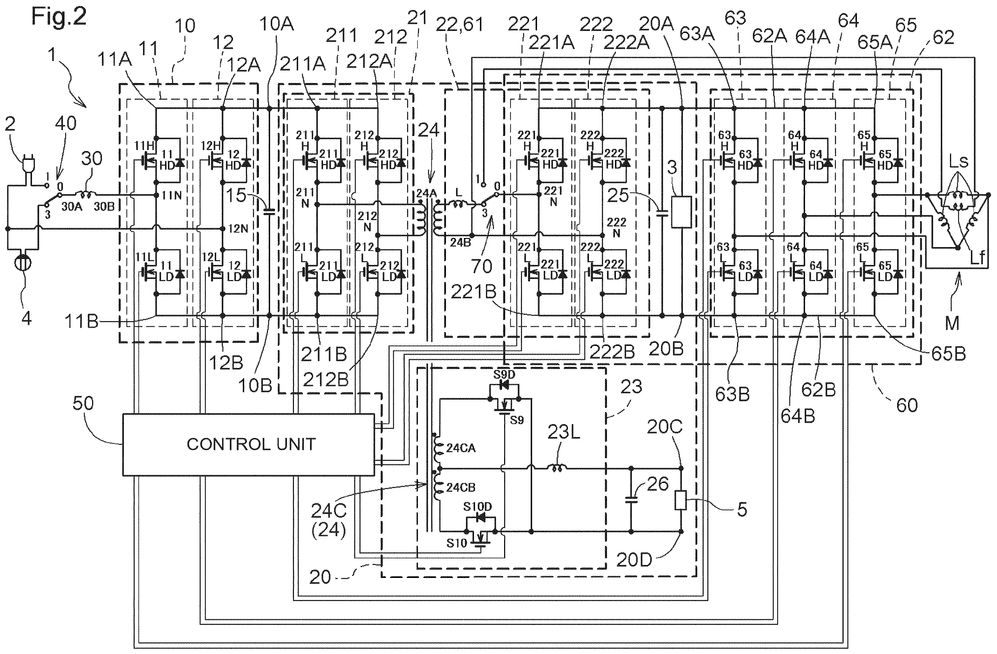

The switching unit 40 can be structured using, for example, a relay. As shown in FIG. 1, when the switching unit 40 is operated to connect a terminal No. 0 and a terminal No. 1, the alternating current power supplied from the supply unit 2 is input to the alternating current-to-direct current conversion unit 10 via the reactor coil 30. As shown in FIG. 2, when the switching unit 40 is operated to connect the terminal No. 0 and a terminal No. 3, alternating current power generated based on the direct current power from the battery 3 (e.g., alternating current power having a voltage value of 100 V as an effective value) can be taken from an outlet 4 via the reactor coil 30.

Therefore, the switching unit 40 switches the converter 20 to the first conversion state when there is a charging request to charge the battery 3, and the switching unit 40 switches the converter 20 to the second conversion state when there is an output request to output the direct current power composed of the direct current voltage having the second voltage value from the alternating current-to-direct current conversion unit 10. That is, the switching unit 40 switches the converter 20 to the first conversion state when the switching unit 40 is operated to connect the terminal No. 0 and the terminal No. 1 as the charging request to charge the battery 3, and the switching unit 40 switches the converter 20 to the second state when the switching unit 40 is operated to connect the terminal No. 0 and the terminal No. 3 as the output request to output the direct current power from the alternating current-to-direct current conversion unit 10.

The control unit 50 alternately drives the switching element 11H and the switching element 11L of the first leg 11, and alternately drives the switching element 12H and the switching element 12L of the second leg 12 at a system frequency. Thus, the alternating current-to-direct current conversion unit 10 can convert alternating current power into direct current power based on the driving of the switching elements of the first leg 11 and the second leg 12.

The control unit 50 alternately drives the switching element 211H of the third leg 211 and the switching element 212L of the fourth leg 212, and the switching element 211L of the third leg 211 and the switching element 212H of the fourth leg 212. Thus, the direct current power from the alternating current-to-direct current conversion unit 10 can be oscillated and input to the primary winding 24A, and the secondary winding 24B can generate alternating current power according to the turn ratio between the primary winding 24A and the secondary winding 24B.

The control unit 50 alternately drives the switching element 221H of the fifth leg 221 and the switching element 222L of the sixth leg 222, and the switching element 221L of the fifth leg 221 and the switching element 222H of the sixth leg 222. Thus, the alternating current power generated in the secondary winding 24B can be converted into direct current power.

By setting the turn ratio between the primary winding 24A and the secondary winding 24B according to the ratio between the voltage value of the alternating current voltage applied to the primary winding 24A and the voltage value of the direct current voltage used to charge the battery 3, direct current power (e.g., 200 V) suitable for charging the battery 3 can be generated in the output portion 20A and the output portion 20B, thereby charging the battery 3.

An alternating current voltage according to the turn ratio between the primary winding 24A and the tertiary winding 24C is generated in the tertiary winding 24C, and is rectified by the switching element S9, the switching element S10, the reactor coil 23L, and the capacitor 26. Direct current power composed of a direct current voltage having a predetermined voltage value is output from the terminal 20C and the terminal 20D. For example, when this voltage value is set to 12 V, the power supply device 1 can charge not only the battery 3 but also the 12-V battery 5 mounted on the vehicle and different from the battery 3.

As described above, in the present embodiment, the second conversion unit 22 performs conversion to obtain the alternating current power having the voltage value suitable for charging the battery 3, and the third conversion unit 23 performs conversion to obtain the alternating current power having the voltage value suitable for charging the battery 5. As described above, the battery 3 outputs the voltage having a voltage value higher than that of the battery 5. Therefore, the voltage value of the output voltage of the secondary winding 24B is higher than the voltage value of the output voltage of the tertiary winding 24C.

When alternating current power is output from the outlet 4 using the charged power in the battery 3, the control unit 50 alternately drives the switching element 221H of the fifth leg 221 and the switching element 222L of the sixth leg 222, and the switching element 221L of the fifth leg 221 and the switching element 222H of the sixth leg 222. Thus, the direct current power from the battery 3 can be oscillated and input to the secondary winding 24B, and the primary winding 24A can generate alternating current power according to the turn ratio between the primary winding 24A and the secondary winding 24B.

The control unit 50 alternately drives the switching element 211H of the third leg 211 and the switching element 212L of the fourth leg 212, and the switching element 211L of the third leg 211 and the switching element 212H of the fourth leg 212. Thus, the alternating current voltage generated in the primary winding 24A is converted into a direct current voltage. This direct current voltage is a voltage obtained by transforming the output voltage of the battery 3 according to the turn ratio between the primary winding 24A and the secondary winding 24B.

The control unit 50 alternately drives the switching element 11H of the first leg 11 and the switching element 12L of the second leg 12, and the switching element 11L of the first leg 11 and the switching element 12H of the second leg 12. Thus, the switching elements of the first leg 11 and the second leg 12 are driven, and the direct current voltage from the battery 3 is converted into alternating current power different from the alternating current power input to the alternating current-to-direct current conversion unit 10. That is, the alternating current voltage of 200 V is applied to the alternating current-to-direct current conversion unit 10 when charging the battery 3, but an alternating current voltage of, for example, 100 V can be output from the charged power (direct current power) in the battery 3.

The motor drive unit 60 drives the wound field motor M based on the direct current power from the battery 3 mounted on the vehicle. The battery 3 mounted on the vehicle is a battery that is charged based on the direct current power converted by the above second conversion unit 22. The wound field motor M includes a field winding Lf provided on a rotor, and stator coils Ls provided on a stator.

The motor drive unit 60 includes a field winding energization unit 61 and an inverter 62. The field winding energization unit 61 energizes the field winding Lf of the wound field motor M using the direct current power from the battery 3. In the power supply device 1, the field winding energization unit 61 is provided in common with the above second conversion unit 22. Therefore, the field winding energization unit 61 energizes the field winding Lf using the fifth leg 221 and the sixth leg 222 of the above second conversion unit 22.

The field winding Lf is provided across the fifth node 221N between the two switching elements (switching element 221H and switching element 221L) of the fifth leg 221 and the sixth node 222N between the two switching elements (switching element 222H and switching element 222L) of the sixth leg 222 via brushes and slip rings (both not shown). In the present embodiment, one terminal of the field winding Lf is connected to the fifth node 221N via the switch 70 described later.

When driving the wound field motor M using the charged direct current power in the battery 3, the control unit 50 alternately drives the switching element 221H of the fifth leg 221 and the switching element 222L of the sixth leg 222, and the switching element 221L of the fifth leg 221 and the switching element 222H of the sixth leg 222. Thus, the direction of the current flowing through the field winding Lf is switched and the field winding Lf is energized.

The inverter 62 energizes the stator coils Ls. The inverter 62 includes a seventh leg 63, an eighth leg 64, and a ninth leg 65. The seventh leg 63, the eighth leg 64, and the ninth leg 65 are provided in parallel to each other between a first power supply line 62A and a second power supply line 62B connected to a potential lower than the potential of the first power supply line 62A. The first power supply line 62A is connected to a positive terminal of the battery 3, and the second power supply line 62B is connected to a negative terminal of the battery 3. Therefore, one end 63A of the seventh leg 63, one end 64A of the eighth leg 64, and one end 65A of the ninth leg 65 are connected to the first power supply line 62A, and the other end 63B of the seventh leg 63, the other end 64B of the eighth leg 64, and the other end 65B of the ninth leg 65 are connected to the second power supply line 62B.

The seventh leg 63 includes a high-side switching element 63H and a low-side switching element 63L connected in series. In the present embodiment, the switching element 63H and the switching element 63L are n-type MOS-FETs. The switching element 63H includes a drain terminal connected to the end 63A, and a source terminal connected to the drain terminal of the switching element 63L. The source terminal of the switching element 63L is connected to the end 63B. The gate terminals of the switching element 63H and the switching element 63L are connected to the control unit 50. Diodes 63HD, 63LD are each provided between the source terminal and the drain terminal of each of the switching element 63H and the switching element 63L with the anode terminal connected to the source terminal and the cathode terminal connected to the drain terminal.

The eighth leg 64 includes a high-side switching element 64H and a low-side switching element 64L connected in series. In the present embodiment, the switching element 64H and the switching element 64L are n-type MOS-FETs. The switching element 64H includes a drain terminal connected to the end 64A, and a source terminal connected to the drain terminal of the switching element 64L. The source terminal of the switching element 64L is connected to the end 64B. The gate terminals of the switching element 64H and the switching element 64L are connected to the control unit 50. Diodes 64HD, 64LD are each provided between the source terminal and the drain terminal of each of the switching element 64H and the switching element 64L with the anode terminal connected to the source terminal and the cathode terminal connected to the drain terminal.

The ninth leg 65 includes a high-side switching element 65H and a low-side switching element 65L connected in series. In the present embodiment, the switching element 65H and the switching element 65L are n-type MOS-FETs. The switching element 65H includes a drain terminal connected to the end 65A, and a source terminal connected to the drain terminal of the switching element 65L. The source terminal of the switching element 65L is connected to the end 65B. The gate terminals of the switching element 65H and the switching element 65L are connected to the control unit 50. Diodes 65HD, 65LD are each provided between the source terminal and the drain terminal of each of the switching element 65H and the switching element 65L with the anode terminal connected to the source terminal and the cathode terminal connected to the drain terminal.

The source terminal of the switching element 63H, the source terminal of the switching element 64H, and the source terminal of the switching element 65H are connected to three terminals of the wound field motor M, respectively.

The control unit 50 closes the high-side switching element of a predetermined leg out of the three legs (seventh leg 63, eighth leg 64, and ninth leg 65) and the low-side switching element of one of the other two legs different from the predetermined leg among the three legs, and causes a current to flow between two terminals out of the three terminals of the wound field motor M under PWM control.

As described above, the three legs are the seventh leg 63, the eighth leg 64, and the ninth leg 65. In the above, "the high-side switching element of a predetermined leg out of the three legs (seventh leg 63, eighth leg 64, and ninth leg 65) and the low-side switching element of one of the other two legs different from the predetermined leg among the three legs" refer to, for example, the high-side switching element of the seventh leg 63 and the low-side switching element of one of the eighth leg 64 and the ninth leg 65. Therefore, the switching elements to be closed are such that a so-called through current does not flow from the first power supply line 62A to the second power supply line 62B when the high-side switching element and the low-side switching element are closed simultaneously.

The three terminals of the wound field motor M are a U-phase terminal, a V-phase terminal, and a W-phase terminal of the wound field motor M. For example, when the switching element 63H of the seventh leg 63 and the switching element 64L of the eighth leg 64 are closed, a current flows from the U-phase terminal to the V-phase terminal of the wound field motor M under the PWM control. For example, when the switching element 64H of the eighth leg 64 and the switching element 63L of the seventh leg 63 are closed, a current flows from the V-phase terminal to the U-phase terminal of the wound field motor M under the PWM control.

When driving the wound field motor M, the control unit 50 causes the current to flow while sequentially switching the stator coils Ls of the wound field motor M. Therefore, during the driving of the wound field motor M, the current flows while sequentially switching two terminals out of the three terminals of the above wound field motor M.

For example, the PWM signal output from the control unit 50 can be input to a driver (not shown) and the driver can input the PWM signal to the inverter 62 with its drive performance improved.

The switch 70 is switchable between a first state and a second state. In the present embodiment, in the first state, the secondary winding 24B and the second conversion unit 22 are electrically connected, and the field winding Lf and the field winding energization unit 61 are electrically disconnected. In this case, as shown in FIGS. 1 and 2, the switch 70 is operated to connect a terminal No. 0 and a terminal No. 3, and the second conversion unit 22 converts the alternating current power generated across both ends of the secondary winding 24B into direct current power. Therefore, the battery 3 can be charged based on the alternating current power from the supply unit 2. When the switching unit 40 is switched to the state shown in FIG. 2, the second conversion unit 22 converts the direct current voltage from the battery 3 into an alternating current voltage. Therefore, alternating current power can be output from the outlet 4 based on the direct current power from the battery 3.

When the terminal No. 0 and the terminal No. 3 of the switch 70 are connected, the field winding energization unit 61 is disconnected from the wound field motor M. Therefore, the direct current power from the battery 3 is not supplied to the field winding energization unit 61. In this case, the wound field motor M is therefore stopped. In the first state, the control unit 50 may stop the energization of the switching elements of the inverter 62.

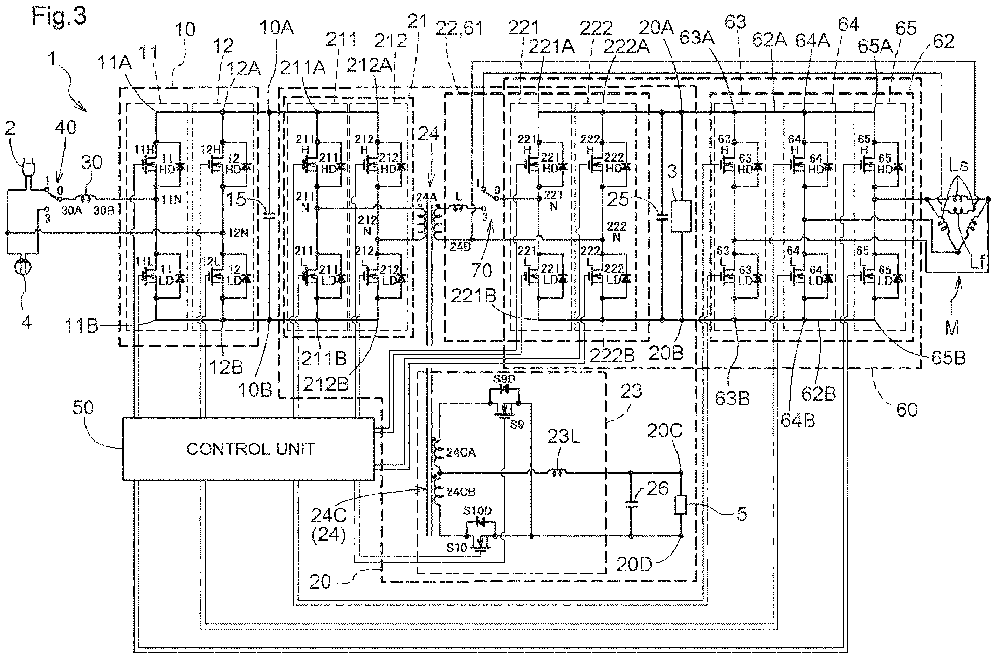

In the second state, the secondary winding 24B and the second conversion unit 22 are electrically disconnected, and the field winding Lf and the field winding energization unit 61 are electrically connected. In this case, as shown in FIG. 3, the switch 70 is operated to connect the terminal No. 0 and a terminal No. 1, and the second conversion unit 22 is disconnected from the secondary winding 24B. Therefore, the power supply device 1 cannot charge the battery 3 based on the alternating current power from the supply unit 2, and cannot convert the direct current voltage from the battery 3 into an alternating current voltage.

When the terminal No. 0 and the terminal No. 1 of the switch 70 are connected, the field winding energization unit 61 is electrically connected to the wound field motor M. Therefore, the direct current power from the battery 3 is supplied to the field winding energization unit 61. In this case, the wound field motor M is therefore driven. In the second state, the control unit 50 may stop the energization of the switching elements of the alternating current-to-direct current conversion unit 10, the first conversion unit 21, and the third conversion unit 23.

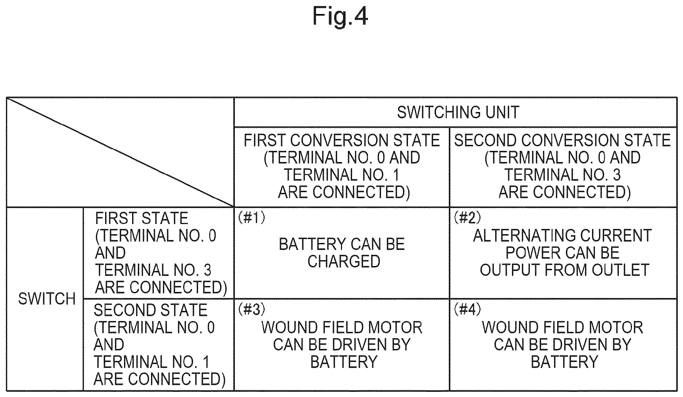

FIG. 4 shows operation states of the power supply device 1 that are set based on the switching unit 40 and the switch 70. As shown in FIG. 4, when the switching unit 40 is in the first conversion state (terminal No. 0 and terminal No. 1 are connected) and the switch 70 is in the first state (terminal No. 0 and terminal No. 3 are connected), the power supply device 1 can charge the battery 3 based on external alternating current power (#1).

When the switching unit 40 is in the second conversion state (terminal No. 0 and terminal No. 3 are connected) and the switch 70 is in the first state (terminal No. 0 and terminal No. 3 are connected), the power supply device 1 can output alternating current power from the outlet 4 (#2).

When the switching unit 40 is in the first conversion state (terminal No. 0 and terminal No. 1 are connected) and the switch 70 is in the second state (terminal No. 0 and terminal No. 1 are connected), the power supply device 1 can drive the wound field motor M using direct current power from the battery 3 (#3). When the switching unit 40 is in the second conversion state (terminal No. 0 and terminal No. 3 are connected) and the switch 70 is in the second state (terminal No. 0 and terminal No. 1 are connected), the power supply device 1 can drive the wound field motor M using direct current power from the battery 3 (#4).

By structuring the power supply device 1 as described above, the field winding energization unit 61 that energizes the field winding Lf using direct current power from the battery 3 can be structured as a so-called full-bridge circuit, and the second conversion unit 22 of the converter 20 that converts the alternating current power from the secondary winding 24B of the transformer 24 into direct current power can be structured as a full-bridge circuit. Since the field winding energization unit 61 and the second conversion unit 22 are structured by the same circuit, the circuit structure of the power supply device 1 can be simplified and the number of components can be reduced by providing the field winding energization unit 61 and the second conversion unit 22 in common. Thus, it is possible to reduce the weight and size of the power supply device 1.

In the first state, the current can be prevented from flowing through the field winding Lf. In the second state, the current can be prevented from flowing through the secondary winding 24B. Since the current can be prevented from flowing through the unwanted portion in each of the first state and the second state, deterioration of components can be suppressed. Further, the power consumption can be reduced.

The battery 3 can be charged via the secondary winding 24B, and the battery 5 that outputs a voltage having a voltage value lower than the voltage value of the output voltage of the battery 3 can be charged via the tertiary winding 24C. When driving the wound field motor M, the wound field motor M can be driven based on the output of the battery 3 that has a higher voltage value.

The configuration disclosed in the above embodiment can be applied in combination with any of the configurations disclosed in the other embodiments as long as no contradiction arises. Regarding the other configurations as well, the embodiments disclosed herein are merely illustrative in all respects. Therefore, various modifications can be made as appropriate without departing from the spirit and scope of the present disclosure.

### [Other Embodiments]

The above embodiment illustrates that the switching elements of the alternating current-to-direct current conversion unit 10 and the converter 20 are the n-type MOS-FETs. However, the switching elements may be p-type MOS-FETs or switching elements different from FETs (e.g., IGBTs or bipolar transistors).

The above embodiment illustrates that the alternating current power is output from the outlet 4 based on the direct current power from the battery 3. However, the power supply device 1 need not have the outlet 4.

The above embodiment illustrates that the power supply device 1 includes the switch 70. However, the power supply device 1 may be structured without the switch 70. In this case, the terminal No. 0 and the terminal No. 1 of the switch 70 are connected, and the terminal No. 0 and the terminal No. 3 are connected. In such a configuration, the control unit 50 may open all the switching elements of the inverter 62 when the power supply device 1 charges the battery 3 based on external alternating current power and when the power supply device 1 outputs alternating current power from the outlet 4, and the control unit 50 may open all the switching elements of the alternating current-to-direct current conversion unit 10 and the first conversion unit 21 when the power supply device 1 drives the wound field motor M based on the direct current power from the battery 5.

The above embodiment illustrates that the transformer 24 is the insulated multi-port transformer including the primary winding 24A, the secondary winding 24B, and the tertiary winding 24C. However, the transformer 24 may include the primary winding 24A and the secondary winding 24B.

### [Summary of Embodiment]

Hereinafter, the summary of the power supply device 1 described above will be provided.

The power supply device 1 includes: the motor drive unit 60 including the field winding energization unit 61 that energizes the field winding Lf of the wound field motor M using direct current power from the battery 3 mounted on the vehicle, and the inverter 62 that energizes the stator coils Ls; the alternating current-to-direct current conversion unit 10 that converts external alternating current power into direct current power; and the converter 20 that converts the direct current power converted by the alternating current-to-direct current conversion unit 10 into direct current power with which the battery 3 is chargeable. The converter 20 includes the first conversion unit 21, the second conversion unit 22, and the transformer 24. The first conversion unit 21 inputs the direct current power from the alternating current-to-direct current conversion unit 10 to the primary winding 24A of the transformer 24. The second conversion unit 22 converts alternating current power from the secondary winding 24B of the transformer 24 into direct current power with which the battery 3 is chargeable. The field winding energization unit 61 and the second conversion unit 22 are provided in common.

With this configuration, the field winding energization unit 61 that energizes the field winding Lf using the direct current power from the battery 3 can be structured as a so-called full-bridge circuit, and the second conversion unit 22 of the converter 20 that converts the alternating current power from the secondary winding 24B of the transformer 24 into direct current power can be structured as a full-bridge circuit. Since the field winding energization unit 61 and the second conversion unit 22 are structured by the same circuit, the circuit structure of the power supply device 1 can be simplified and the number of components can be reduced by providing the field winding energization unit 61 and the second conversion unit 22 in common. Thus, it is possible to reduce the weight and size of the power supply device 1.

It is preferable that the power supply device 1 further include the switch 70 switchable between the first state in which the secondary winding 24B and the second conversion unit 22 are electrically connected and the field winding Lf and the field winding energization unit 61 are electrically disconnected and the second state in which the secondary winding 24B and the second conversion unit 22 are electrically disconnected and the field winding Lf and the field winding energization unit 61 are electrically connected.

With this configuration, the current can be prevented from flowing through the field winding Lf in the first state, and the current can be prevented from flowing through the secondary winding 24B in the second state. Since the current can be prevented from flowing through the unwanted portion in each of the first state and the second state, deterioration of components can be suppressed. Further, the power consumption can be reduced.

In the power supply device 1, it is preferable that the transformer 24 be the insulated multi-port transformer including the primary winding 24A, the secondary winding 24B, and the tertiary winding 24C, and the voltage value of the output voltage of the secondary winding 24B be higher than the voltage value of the output voltage of the tertiary winding 24C.

With this configuration, the battery 3 can be charged via the secondary winding 24B, and the battery 5 that outputs a voltage having a voltage value lower than the voltage value of the output voltage of the battery 3 can be charged via the tertiary winding 24C. When driving the wound field motor M, the wound field motor M can be driven based on the output of the battery 3 that has a higher voltage value.

In the power supply device 1, the second conversion unit 22 includes the fifth leg 221 and the sixth leg 222 (two legs) provided in parallel to each other across the positive terminal and the negative terminal of the battery 3, and the fifth leg 221 and the sixth leg 222 each include the high-side switching element 221H, 222H and the low-side switching element 221L, 222L connected in series.

With this configuration, the driving of the high-side switching elements 221H, 222H and the low-side switching elements 221L, 222L of the fifth leg 221 and the sixth leg 222 can be used to perform the conversion from one of the alternating current power and the direct current power to the other of them, and the conversion from the other of the alternating current power and the direct current power to the one of them.

In the power supply device 1, the second conversion unit 22 is configured to, when the switch 70 is in the first state, supply alternating current power from the secondary winding 24B to the fifth node 221N (node) between the high-side switching element 221H and the low-side switching element 221L of the fifth leg 221 and the sixth node 222N (node) between the high-side switching element 222H and the low-side switching element 222L of the sixth leg 222, and when the switch 70 is in the second state, energize the field winding Lf from the fifth node 221N and the sixth node 222N.

With this configuration, the charging of the battery 3 and the energization of the field winding Lf can be switched depending on the state of the switch 70, and the second conversion unit 22 can be used as the field winding energization unit 61.

### INDUSTRIAL APPLICABILITY

The technology according to the present disclosure can be used in a power supply device mounted on a vehicle.

### Description of the Reference Numerals

1: power supply device, 3: battery, 10: alternating current-to-direct current conversion unit, 20: converter, 21: first conversion unit, 22: second conversion unit, 24: transformer, 24A: primary winding, 24B: secondary winding, 24C: tertiary winding, 60: motor drive unit, 61: field winding energization unit, 62: inverter, 70: switch, 221: fifth leg (leg), 221H: switching element, 221L: switching element, 221N: fifth node (node), 222: sixth leg (leg), 222H: switching element, 222L: switching element, 222N: sixth node (node), Lf: field winding, Ls: stator coil, M: wound field motor

## Claims

1. A power supply device comprising:
a motor drive unit including a field winding energization unit configured to energize a field winding of a wound field motor using direct current power from a battery mounted on a vehicle, and an inverter configured to energize a stator coil;
an alternating current-to-direct current conversion unit configured to convert external alternating current power into direct current power; and
a converter configured to convert the direct current power converted by the alternating current-to-direct current conversion unit into direct current power with which the battery is chargeable, wherein
the converter includes a first conversion unit, a second conversion unit, and a transformer,
the first conversion unit is configured to input the direct current power from the alternating current-to-direct current conversion unit to a primary winding of the transformer,
the second conversion unit is configured to convert alternating current power from a secondary winding of the transformer into direct current power with which the battery is chargeable, and
the field winding energization unit and the second conversion unit are provided in common.

2. The power supply device according to claim 1, further comprising a switch switchable between a first state in which the secondary winding and the second conversion unit are electrically connected and the field winding and the field winding energization unit are electrically disconnected and a second state in which the secondary winding and the second conversion unit are electrically disconnected and the field winding and the field winding energization unit are electrically connected.

3. The power supply device according to claim 1 or 2, wherein
the transformer is an insulated multi-port transformer including the primary winding, the secondary winding, and a tertiary winding, and
a voltage value of an output voltage of the secondary winding is higher than a voltage value of an output voltage of the tertiary winding.

4. The power supply device according to claim 2, wherein
the second conversion unit includes two legs provided in parallel to each other across a positive terminal and a negative terminal of the battery, and
the two legs each include a high-side switching element and a low-side switching element connected in series.

5. The power supply device according to claim 4, wherein the second conversion unit is configured to:
when the switch is in the first state, supply the alternating current power from the secondary winding to a node between the high-side switching element and the low-side switching element of one of the two legs and a node between the high-side switching element and the low-side switching element of the other of the two legs; and
when the switch is in the second state, energize the field winding from the two nodes.
